# EUROPEAN PATENT APPLICATION

(11) **EP 3 130 655 A1**
(43) Date of publication of application: **15.02.2017**
(21) Application number: 15181015.7
(22) Date of filing: 13.08.2015
(51) Int. Cl.: C11B 9/00, C11B 9/02

(54) **PROCESS FOR ISOLATION OF ODORIFEROUS AGENTS**

(71) Applicant: Universität Regensburg, 93053 Regensburg (DE)
(72) Inventor: KUNZ, Werner, 93051 Regensburg (DE); HÖSS, Theresa, 86637 Binswangen (DE); TOURAUD, Didier, 93051 Regensburg (FR)
(74) Representative: Leissler-Gerstl, Gabriele

(57) **Abstract**

A process for isolation of at least one odoriferous agent from a plant substrate is disclosed which comprises a) contacting a plant substrate with an aqueous soap extraction solution comprising an aqueous medium and at least one soap compound R-C(=O)O⁻M⁺ or ⁺M⁻O(O=)C-R-C(=O)O⁻M⁺, wherein R is saturated or unsaturated linear, branched or cyclic C₃ to C₁₇ alkyl or C₆ to C₁₈ aryl, wherein the alkyl or aryl group can be substituted with up to 5 functional groups, and wherein M⁺ is a monovalent cation, to obtain a soap extract and b) isolating a flavour mixture comprising at least one odoriferous agent from the soap extract obtained in step a).

## Description

The present invention is concerned with a process for extraction of plant material.

Many plants contain odoriferous agents which are highly desirable for the production of flavoursome products, for example in the field of parfums or cosmetics. The odoriferous agents can be present in blossoms, leaves, bark, roots and other tissue of a plant. Some plants contain precursor compounds that can develop into valuable compounds.

For example, the plants of the *Iridaceae* family have valuable compounds in the rhizomes that can develop into scented compounds named irones. Orris butter or iris butter is such a very valuable product which is used in the flavour and fragrance industry. Methods for isolating orris butter are known, usually orris butter is isolated from rhizomes of an iris species. Rhizomes of iris can be harvested after a cultivation period of 2 to 4 years. The rhizomes then have to be stored for long time, such as about 3 to 5 years for maturation. Shortly after harvest the rhizomes contain only precursor compounds of the materials which are useful in the flavour industry, it is assumed that the scenting compounds are built during maturation by oxidation. When the rhizomes are ready to be worked up, they are ground to powder and are extracted either by steam or by solvent extraction.

Other plants contain odoriferous material in the leaves, blossoms, bark, roots etc.. It is a challenge to isolate odoriferous compounds from plant substrate, it requires specific conditions as the odoriferous compounds often are very sensitive to temperature, pressure and other harsh conditions.

Steam distillation can be used for extracting essential oil from plants. However, the problem when using steam distillation for extracting essential oils from plants is the long duration of pre-soaking and distillation, low yield and high cost. Steam distillation requires the use of higher temperature, which on the one hand can be detrimental to the sensitive odoriferous agents and on the other hand requires more energy than methods carried out at room temperature or slightly above. Moreover, no specificity or selective extraction is possible and hydrophilic substances cannot be extracted.

Essential oils or other flavourants can also be extracted using organic solvents like methanol, toluene, hexane. However, it is necessary to remove any solvent from the extract as most solvents are undesired or even harmful. Moreover, solvent extraction is laborious and the resulting extract is quite different from traditional orris butter, as undesired compounds are extracted as well.

Making use of organic solvents can preclude the use of an odoriferous extract obtained in products that are in contact with human skin, such as in cosmetic products or in food. Therefore, it is desirable to provide a method for obtaining an odoriferous extract from plants with no or hardly any "foreign" or undesirable ingredient, a method that allows extraction of the odoriferous agents under mild conditions and with reasonable yield and at the same time results in a product, like orris butter, in a quality and a quantity which is at least equal to products obtained with known processes, or which results in products of superior quality and/or a higher yield of the desirable components.

The flavour of orris butter is composed of three main compounds and many compounds which are present in very minor amounts. The main flavour contributing compounds are α-, β- and γ-irone.

The rhizomes comprise about 30% myristic acid or myristic acid ester, sugars and starch, and only about 0.1 to 0.2% of the valuable flavourants. About 10 to 20% of the essentials oils are irones, the remaining part being a multiplicity of different flavoursome or odoriferous compounds.

The known methods for obtaining orris butter require long and cumbersome proceedings. For obtaining the essential oils by using steam distillation, the ground rhizomes have first to be soaked for several hours. The steam distillation then has to be carried out for more than a day, for example for three days.

It was the object of the present invention to provide a process for obtaining odoriferous compounds from plant substrates, such as iris rhizomes, rose or jasmine blossoms, in an efficient, environmentally friendly, process using mild conditions and to obtain scented products in a high quantity and quality without using detrimental harmful conditions, and/or undesirable flammable or combustible solvents.

This object is achieved by using a process for isolation of odoriferous compounds as defined in the claims.

It has been found that by using soap components odoriferous compounds can be isolated in short time, in high yield and in excellent quality. Surprisingly it is possible to extract odoriferous agents from a plant substrate in shorter time and at lower temperature than with the methods known from the prior art, for example at room temperature or slightly increased temperature and within very short time, such as about 30 to 60 minutes or even less. One explanation for this could be that by using the soap extracting solution of the present invention the cells in the plant parts are destroyed or broken up and result in fast release of the odoriferous agents. Furthermore, this would allow easy access for the soap extracting solution to the desirable compounds.

Even more surprising it was found that with the method of the present invention it is possible to vary the notes of a flavour mixture in a controlled manner by varying components of the soap composition used for extraction. Moreover, the method of the present invention allows to create flavour mixtures or odoriferous compositions using components that are naturally contained in plants. The method of the present invention enables to isolate valuable flavour mixtures for the fragrance industry such as orris butter, perfume of jasmine or roses or other scentful plants in an efficient and environmentally friendly manner. Orris butter for example which is one of the most valuable base materials for the fragrance industry, can be obtained in high yield and excellent quality.

### Definitions

In this description the following definitions are used.

"Plant" or "plant parts" refers to any type of plant that comprises odoriferous compounds.

The term "plant substrate" comprises any part of a plant that contains odoriferous compounds such as roots, rhizomes, air roots, bark, wood, leaves, buds, needles, blossoms, tissue etc.. The plants or plant parts are harvested as it is known to the skilled person. It is known that there are plant parts that have to be extracted immediately after harvest, whereas other plants or plant parts need some time for maturation before the valuable odoriferous compounds can be extracted. In the case of Iridaceae the valuable flavourants are not or hardly in the plant when it is harvested but develop over time under known storage conditions. It is assumed that the flavouring compounds develop by oxidation. Plant substrate shall refer to any plant or plant part that has at least some odoriferous content and includes plant powder or plant granules.

"Plant powder" refers to plants or plant parts that have been crushed or comminuted to a size that is useful for extraction. Methods for crushing sensitive parts are known in the art. The method has to be such that the valuable odoriferous compounds which have a low boiling point are not destroyed or impaired.

Usually the plants or plant parts are prepared before extraction for example by drying or storing under controlled conditions. The plants are comminuted to a size small enough to be extracted and usually plant powders or plant granules are used.

"Odoriferous agent" refers to any material that yields an odour, a scent or an olfactory sensation and/or can create olfactory stimuli. It can be one compound or a combination of compounds that creates an olfactory perception. This term shall comprise any compound that is indicated as flavourant, flavouring agent, fragrancy, parfum, scent, etc.

"Flavour mixture" is a mixture of odoriferous agents that create an olfactory perception and/or induce a scent or odour, such as a natural scent.

"Aqueous soap extracting solution" (also referred to as extracting medium) refers to a composition for extracting odoriferous agents that comprises an aqueous solvent or solvent mixture and dissolved therein at least one soap compound. The soap extracting solution is a thermodynamically stable solution of one or more soap compounds and optionally one or more hydrotropic additives, wherein soap and, if used, additive molecules are dispersed homogenously and wherein soap molecules form micelles or micelle-like structures, which can also be like liquid crystalline phases and/or wherein soap and additive molecules together act as surfactants.

"Aqueous solvent" refers to water or a mixture of water with a minor amount of a water miscible or hydrophilic solvent, in particular pure water. A water miscible solvent can be added, but only in an amount that does not interfere with the isolation of the flavour mixture.

A "soap compound" is a salt of a fatty acid and a monovalent cation. A soap compound is in particular a salt of a fatty acid and a monovalent cation that in an aqueous medium forms micelle-like structures.

The term "fatty acid" as used in this description refers to an alkyl or aryl carboxylic acid having a linear, branched, or cyclic chain of 4 to 24 carbon atoms, which can carry functional groups, for example up to five functional groups, like hydroxy groups, and can be saturated or mono- or poly-unsaturated. Examples are linear or branched carboxylic acids or dicarboxylic acids having a chain of 4 to 18 carbon atoms, which can be substituted with functional groups like hydroxy or alkyl or aryl groups. The term fatty acid shall also comprise fruit acids like hydroxy carboxylic acids or dicarboxylic acids.

A "monovalent cation" can be any positively charged metal or group, in particular any monovalent metal or group that is naturally present in plants. Examples are positively charged alkali metal ions, like potassium and sodium, or nitrogen containing charged units like ammonium or cholinium.

A "hydrotropic additive" is a compound that solubilises less soluble compounds in aqueous solution and typically is a surfactant-like molecule having a hydrophilic part and a hydrophobic part. Hydrotropic additives in the method of the present invention can generally be used, for example to allow extraction of odour components that otherwise would not be extracted, like polar substance, or can in particular be used together with those soap compounds that are not completely water-soluble in water at room temperature or temperatures up to about 40°C to decrease the dissolution temperature. Thus, any compound that solubilises a soap compound in an aqueous solution as defined above or together with a soap compound is homogenously dispersed in an aqueous solution at a temperature of up to 40°C, that is biocompatible and does not interfere with the odoriferous agents can be used as hydrotropic additive. Examples for a hydrotropic additive that are "endogenous" for plants are fruit acids and those fruit acids that are present in a plant and their salts and esters can be used as long as they have a hydrotropic or co-surfactant activity in the soap extracting medium and/or in combination with the fatty acids, examples being cinnamic or mandelic acid. A compound such as C₆-C₁₂ dicarboxylic acid or a salt or ester thereof, C₆-C₁₂ hydroxy carboxylic acid or a salt or ester thereof, branched or cyclic C₆-C₁₈ fatty acid or a salt or ester thereof, or a mixture of two or more of these compounds can be useful as hydrotropic additive. For some embodiments also short chain acids like lactic acid can be contemplated.

"Iris" refers to plants of the family Iridaceae and comprises Iris germanica, Iris pallida, Iris pallida argentea variegata, Iris pallida aurea variegata, Iris pallida alba, Iris neglecta, Iris spectabilis, Iris macedonica, or Iris florentina and /or other varieties of the species Iris bar-bata and other iris species of various origin. Preferred species are iris pallida or iris germanica.

"Iris substrate" refers to any type or part of Iridaceae, that contains odoriferous agents and can be extracted. Examples are in particular rhizomes, parts of rhizomes, rhizomes in crushed or powdered form, rhizome extracts from Iridaceae, wastes that are recovered after industrial extraction of Iridaceae rhizomes, and any other part of the plants that contain odoriferous agents.

It has been found that a flavour extract can be obtained from plants or plant parts by using the following two steps:
a) contacting a plant substrate with an aqueous soap extraction solution and
b) isolating a flavour mixture.

Thus, a process for isolation of at least one odoriferous agent from a plant substrate is provided which comprises the steps:
a) contacting a plant substrate with an aqueous soap extraction solution comprising an aqueous medium and at least one soap compound R-C(=O)O-M+ or +M-O(O=)C-R-C(=O)O-M+, wherein R is saturated or unsaturated linear, branched or cyclic C3 to C17 alkyl or C6 to C18 aryl, wherein R can be substituted with alkyl, aryl, at least one functional group such as up to 5 hydroxy groups, and wherein M+ is a monovalent cation and
b) isolating a flavour mixture comprising at least one odoriferous agent from the soap extract obtained in step a).

By using this method a very valuable high quality extract can be obtained which comprises not only the main flavour compounds of a plant but also the many compounds in minor amounts that contribute to the flavour, in very short time and using "green" substances. Moreover, it has been found that using the method of the present invention can provide a flavour composition that comprises polar as well as non-polar compounds in addition to those hydrophobic compounds that are available by steam distillation. Thereby different notes of a plant flavour can be created. The method can be adapted to selectively extract a particular fraction of flavourants, such as polar components, that can be extracted by using a short chain fatty acid soap (less than 8 carbon atoms in the chain) in the extraction medium. When extracting *Iridaceae,* it is possible to enrich irones, that can be extracted by using longer chain soaps, for example by using myristate soap in the extraction medium.

Parameters that can be used to "tailor" the extract are the number and type of fatty acids soaps, the number and type of additives, pH-value, temperature. The skilled person can find the best combination of these parameters to isolate a specific flavour composition.

Furthermore, it has been found that it is possible with the method of the present invention not only to extract valuable flavourants from plants and plant parts, but that it is also possible to extract predetermined fractions of a flavour or aroma. It was found that using an aqueous soap dispersion comprising at least two different soap compounds allows to influence the mixture of extractants. The smaller the extracting soap is the more polar components are in the flavour extract, whereas polar components can be avoided, if for example components having higher molar mass are used.

It has been found that by using the aqueous soap extracting solution according to the present invention short extraction times, high yield and an extract of high quality can be achieved because of the mild extraction conditions and in addition specificity can be obtained when necessary. Furthermore, the soap compounds used according to the present inventions are compounds of fatty acids that are naturally in the plant. Therefore, with the method of the present invention it is avoided to include an undesired amount of foreign substances or toxically or environmentally detrimental substances. Mostly or even only naturally occurring compounds are part of the flavour mixture which contributes to the high quality of the product.

In one embodiment the soap compounds used are compounds that are based mainly or only on fatty acids and cations that are naturally occurring within the plant that is extracted. For example when extracting Iridaceae, a mixture is used which comprises a soap of myristic acid, i.e. a fatty acid that is predominantly present in *Iridaceae* rhizomes.

The method of the present invention comprises two steps which both are important for obtaining the valuable flavour extract. The first step is an extraction step wherein the odoriferous compounds are extracted from the plant substrate, i.e. plants or parts thereof by an aqueous soap extracting solution which comprises at least one or two soap compounds dissolved or dispersed in an aqueous medium, such as water.

The extraction step is carried out just by contacting the plant substrate with the aqueous soap extracting solution of the present invention. The duration of the extracting step depends on the plant substrate used, for example on the type of the plant and the size of the substrate. Good results are obtained when extraction is carried out for about 10 to about 60 min, preferably 15 to 40 min. In the case of iris rhizomes it has been found, that extracting longer than 30 min does not provide more of the desirable odoriferous agents. In this case, therefore, contacting times of 20 to 35 min are most preferable.

If plant substrates are used where odoriferous agents are easy available, for example a fine powder of leaves or blossoms, contact times of only a few minutes, such as 2 to 10 min. or even 3 to 7 min. can be sometimes sufficient to extract the valuable parts.

Depending from the type of soap component the extraction can be carried out at room temperature or even below or at slightly increased temperatures. A useful temperature range is 15 to 45°C, preferably 20 to 30°C. The temperature for extraction depends on the solubility of the soap compound in the extracting medium. If the solubility of a fatty acid soap is not sufficient, a hydrotropic additive can be added to the solution as described below.

Soap compounds that are useful for the extraction according to the present invention are soaps of fatty acids as defined above, i.e. generally fatty acids, such as saturated or unsaturated linear, branched or cyclic carboxylic acids or dicarboxylic acids wherein the carboxylic acid can be an alkyl or aryl carboxylic acid. The fatty acid can also carry functional groups, in particular hydroxy groups. Fatty acids having one hydroxy group are preferred, up to five hydroxy groups can be present. Furthermore, the chain of the carboxylic can be substituted with alkyl and aryl groups. The counter ion is a monovalent cation, preferably a cation which is naturally present in the plant to be extracted. Examples for useful cations are sodium, potassium, ammonium and cholinium. Any carboxylic acid salt as defined above can be used as soap compound of the present invention as long as it has soap properties, i.e. is dissolved in an aqueous medium and forms mycels or mycel-like structures in an aqueous medium.

The aqueous soap extracting solution of the present invention comprises one or more soap compounds and can comprise further agents like hydrotropic additives. It is preferred that the solution comprises at least 50 Mol-% of the solutes of a fatty acid soap.

It has been found that by using a short-chain soap it is possible to extract polar odoriferous substances that cannot be extracted with steam distillation or with long chain soaps. However, Thus, it was found that there can be a problem if a combination of very short-chain soap, for example a C₄ soap, with of a long-chain soap, for example a C₁₄ soap, is used as this can result in a hardly compatible mixture that requires higher temperatures to get dissolved. Surprisingly, it was found that this problem can be overcome by adding another soap having a chain length between both which provides for a better solubility of both in water. A ternary mixture of a C₄ soap with of a long-chain soap, for example a C₁₄ soap, becomes compatible when a small amount of a medium chain soap, for example a C₆ or C₈ soap, is added.

It has been surprisingly found that a combination of soaps of differing length can provide an extracting soap solution that can be used at room temperature or slightly higher temperatures, such as below 40°C. The reason is that a combination of soaps of different lengths can have a solubilising effect if they are carefully combined. A ternary composition of short-chain, medium-chain and long-chain fatty acid soaps has been found to lower the dissolution temperature and, therefore, is of particular use.

Another approach to overcome the incompatibility is to use a hydrotropic additive as outlined below.

The extracting medium of the present invention can also contain one or more hydrotropic additives to improve the solubility of soap components, to improve extracting properties of the solution or to tailor the extracting properties, for example to extract more polar compounds. In particular, when a long chain fatty acid soap is used as soap component and the solubility is not sufficient at room temperature, the addition of an additive is favorable. The type of hydrotropic additive depends on the soap compound used in the extracting medium and the temperature desired for extraction. If for example the main soap component is a long-chain fatty acid which can be solved in the extraction medium only at a higher temperature, the additive can be used to lower the dissolution temperature. Hydrotropic additives that are useful in the method of the present invention are in particular compounds that are based on fatty acids or fatty alcohols, preferably fatty acids or alcohols that are naturally occurring in the plant to be extracted. Examples for additives are carboxylic acids, salts and esters thereof for example mono- and dicarboxylic acids having alkyl and/or aryl groups. Useful are for example compounds selected from fatty alcohols, C₆-C₁₂ dicarboxylic acids or salts or esters thereof, C₆-C₁₂ hydroxycarboxylic acids or salts or esters thereof, branched or cyclic C₆-C₁₈ fatty acids or salts or esters thereof or mixtures of any of the mentioned compounds.

For some extractions it is useful to combine compounds of different length. In this case two or more fatty acid soaps of different length, one or more fatty acid soaps together with one or more hydrotropic additive with differing length or any combination thereof can be used.

If mixtures of fatty acid soaps and hydrotropic additives are used, it is preferred that at least 50 Mol-% of the components are soap components.

The method of the present invention can be adapted as outlined above to specifically extract fractions of a flavour mixture or to enrich particularly characterizing parts of a flavour. For this purpose an extraction medium is used that comprises either at least two fatty acid soaps as defined above, or at least one fatty acid soap and an additive. An additive as used according to the present invention is a soap like compound that co-operates with the fatty acid and supports the extraction, has a solubilizing function, and/or provides for the extraction of a specific fraction of the flavour. In other words the additive is added to adapt the extraction properties of the soap dispersion.

The second step of the method of the present invention, i.e. step b) results in the isolation of the valuable flavour composition or flavour mixture. The flavour mixture comprises as many of the desired flavourant compounds as possible, i.e. not only those flavourants that mainly contribute to the specific flavour of a plant, but also the many compounds in minor amounts that are necessary for a "complete" olfactory perception. The method of the present invention allows also to tailor the conditions such that only a specific fraction of odoriferous agents is extracted/isolated. For example, in the case of *Iridaceae* it is possible to obtain the irones in high quantity.

These odoriferous agents are isolated from the soap extract obtained by contacting a plant substrate with the aqueous extracting solution. Any method that results in a separation of an oily phase containing at least part of the fatty acid and the majority of the extracted odoriferous agents can be used. It has been found that three approaches are particularly useful for isolation: i) separation of an oily phase by change of pH value and/or decrease of temperature, ii) precipitation of fatty acids by adding di- or polyvalent cations, or iii) extraction with an organic solvent, such as ether.

The flavour of a plant is formed by a composition of compounds which are mainly essential oils, i.e. compounds having a low boiling point and, therefore, evaporate at ambient conditions or a temperature that is between ambient temperature and body temperature. The compounds are evaporated and enter the olfactory organ where they create or induce the olfactory impression. The more compounds contributing to the flavour are present, the richer the impression is and the more perfect and valuable the mixture is.

It may be desirable to extract all or essentially all of those compounds that contribute to a flavour or it may be desirable to selectively extract a predetermined part thereof. Furthermore, it is important to recover or isolate as many of those desirable compounds as possible from the extract.

In one embodiment of the present invention the flavour mixture is isolated by changing the pH and/or temperature of the extract, thereby breaking the micelles, so that the hydrophobic compounds can migrate to the fatty phase or oily phase whereas all aqueous soluble compounds remain in the aqueous phase.

Without being bound by a theory it is assumed that the soap compounds used according to the present invention wet or coat the flavourant compounds in the plant substrate and enclose them within micelles. The hydrophobic flavourant compounds, which are mostly essential oils, i.e. organic compounds that are hydrophobic, are attracted by the hydrophobic part of the soap, i.e. the fatty acid part or alkyl chain part, and, therefore, end up in the center of the micelle. The lipophobic part of the soap, i.e. the acid part or carboxylic group is disposed such that it forms an outer layer which is in contact with the aqueous solution that is part of the extraction medium.

As soon as the pH value of this medium is changed, i.e. lowered, protons migrate to the carboxylic group of the fatty acid and protonate it. The neutralized fatty acid becomes water insoluble and migrates into the oily phase. It is assumed without being bound by theory that the hydrophobic flavourant compounds still adhere to the hydrophobic part of the fatty acid and thereby together with the protonated fatty acids separate as oily phase.

By changing the pH value the micelles break up and phase separation occurs such that the extract medium separates in an aqueous phase and an oily phase. All hydrophobic components migrate to the oily phase, whereas aqueous soluble parts and hydrophilic compounds migrate to the aqueous phase. The most valuable components of the extract, i.e. the flavourants which are essential oils migrate together with the fatty acids into the oily phase and can be separated together with the oily phase. Thereby, a flavour mixture can be isolated wherein the flavourants are embedded in an oily phase which is formed primarily by the fatty acids which have been added as soap components and fatty acids which are native part of the plant substrate.

By using those soap compounds that are derived from fatty acids that are naturally in the plant or plant substrate to be extracted, the obtained flavour mixture will be comprised only of those compounds that are naturally part of the fragrance containing plant. This results in a particularly harmonic and naturally scenting flavour.

To enrich odoriferous agents and at least part of the fatty acid soaps in the oily phase the pH value of the extract that has been obtained by contacting the plant substrate with an aqueous soap dispersion can be lowered by any acidifying or neutralizing agent that is environmentally acceptable, does not destroy or impede the flavour mixture, is not harmful to humans or animals and is commonly available. Examples are acetic acid, citric acid, hydrochloric acid. It is also possible to lower the temperature to separate an oily phase.

The flavor mixture can also be isolated by precipitating fatty acids that are present in the soap extract by adding di- and/or polyvalent cations. As is known, magnesium, calcium and other di- or polyvalent salts of fatty acids are insoluble in an aqueous medium and, therefore, by adding such cations the fatty acid soaps are precipitated as divalent salts. Such precipitated extract that primarily comprises the fatty acid salts and the odoriferous agents can be used as such. Furthermore, it is possible to isolate a flavour mixture from this precipitated extract by contacting the extract with an organic solvent, such as an ether or alcohol, for example diethyl ether or ethanol to dissolve the flavoring agents. The obtained slurry can then be filtered to separate the dissolved flavor mixture. Afterwards the solvent is removed as known to the skilled person, i.e. for example by evaporation.

A further option to isolate the flavor mixture from the soap extract is the use of an organic solvent or an organic solvent mixture to extract all desirable compounds from the extract. Organic solvents that are useful for this approach are known and can be those solvents that are used for extraction methods known in the prior art. A solvent extract obtained by extracting the soap extract of the present invention differs from a solvent extract, obtained by a method known in the prior art, because in the soap extract the valuable flavor components have been enriched and undesirable components are not or hardly present in the soap extract and, thus, cannot be extracted by the solvent.

As an example the extraction of an *Iridaceae* substrate is described to more clearly show the method of the present invention.

Rhizomes of an *Iridaceae* plant, for example rhizomes of *Iris germanica, Iris pallidae* or *Iris florentina_*or a mixture thereof is "matured" to allow the irones to build. As soon as the rhizomes are ripe to be extracted, the rhizomes are crushed to obtain a powder of *Iridaceae* rhizome. This powder is then contacted with an aqueous dispersion of an aqueous solvent wherein at least one soap component is dispersed. The aqueous dispersion is the extraction medium and comprises at least one, preferably at least two or even three or more soap components.

It has been found that a combination of at least three different soaps results in a very rich flavour mixture with very high quality and excellent olfactory properties. The soap components can be components that are used in soaps, i.e. metal salts of fatty acids, wherein the fatty acids can be saturated or unsaturated and preferably are saturated because saturated fatty acids are more stable and not prone to rancidity, and can be straight chained or branched or cyclic. It is preferred to use a combination of fatty acids that are part of the fatty or oily part of the plant substrates to be extracted. In the case of *Iridaceae,* where a myristic acid is the most dominant fatty acid present in the rhizomes, a myristic acid salt, referred to as M⁺C₁₄⁻, is used as one component in the extract medium. Furthermore, it has been found that salts of fatty acids having a low number of carbon atoms are useful for extracting polar compounds from the plant substrate. Therefore, one component of the extract medium preferably is a soap component having four carbon atoms (M⁺C₄⁻).

Furthermore it has been found that some components M⁺C₄⁻ and M⁺C₁₄⁻ are not very compatible with each other, i.e. cannot provide an extraction medium without forming phases, at least when they are used in amounts that are useful to extract major parts of the flavour mixture. Surprisingly it was found that in this case when adding a soap component that has a size between the low chain soap component and the high chain soap component, for example M⁺C₈⁻, this medium chain soap component functions as solubilizer. Therefore, a mixture of a low chain soap component, high chain soap component and medium soap component has proven to be very useful as extraction medium. In another embodiment one or more hydrotropic additives can be used instead of M⁺C₄⁻ or M⁺C₈⁻, or in addition. Further soaps can be added to obtain even a broader spectrum of flavourant compounds out of the plant substrate.

The flavour mixture obtained by extracting the iris substrate can be isolated from the soap extract as described above. In one embodiment a solvent or solvent mixture is used which is immiscible with the aqueous phase, can dissolve the odoriferous agents and other flavourant components together with the fatty phase. The solvent or solvent mixture has to be environmentally compatible, may not harm the flavourant compounds and may not be detrimental to the health. Suitable solvents are ethers and esters or other solvents that are used for extracting flavourants, such as hexane, tetrahydrofurane etc.. The mixture extracted from the extract medium which is a composition comprising a solvent or a solvent mixture together with the oily parts of the extract is then processed by removing the solvent or solvent mixture. This can be done either by evaporation or by any other means known to the skilled person, like rotovaporation etc.

The method of the present invention is very valuable because it is possible to tailor the extract obtained from the plant substrate. By varying the soap components used for extraction the composition of the flavourant mixture can be controlled. If an extract is required that comprises a higher amount of polar compounds, the extraction mixture will comprise more of low chain soap components. If it is in particular the highly hydrophobic part of the fatty phase of a plant substrate that is required, soap components having a long chain are used.

Only with some routine experiments it is possible to tailor the extract or the composition of the flavourant mixture that is deemed to be most pleasant. In this way, it is also possible to obtain reproducible flavour compositions.

The material to be extracted can be either a plant or parts thereof or it can also be an extract which had been extracted before with conventional means. For example, the plant substrate can be an iris extract, iris extraction waste or iris plant tissue.

The extraction method of the present invention is characterized by the use of at least one soap component or a combination of two or more soap components or a combination of at least one soap component and at least one hydrotropic additive. The different components differ e.g. by the number of carbon atoms in the fatty acid chain and/or by the counter ion. Preferably, the mixture of soap components comprises soap compounds having chains with a different length, i.e. different number of n. It has been found that a surprisingly good mixture is a composition of M⁺C₄⁻, M⁺C₈⁻ and M⁺C₁₄⁻. Instead of M⁺C₁₄⁻ a longer chain soap can be used as long as it is miscible in the extraction medium. M⁺C₁₆⁻ or a branched variant of fatty acids like isovalerianic acid are also considered.

The counter ion also has an influence on the solubility of the soap component in the extraction system. It has been found that cholinium soap components are particularly useful because cholinium as counter ion increases the solubility of the soap component in the extraction medium. Other counter ions which have a lower basicity are also contemplated. Usually the soap components that are used in the present extraction medium are sodium or potassium salts of fatty acids.

Surprisingly, the extraction medium of the present invention allows very short extraction cycles. It has been found that a extraction time of 30 minutes or less allows to extract all valuable compounds from plant material. For example, if powdered *Iridaceae* rhizome is used as plant substrate, 30 minutes of contact with the soap composition is enough to more or less fully extract all valuable components. A very rich flavour mixture is obtained if a composition of C₄, C₈ and C₁₄ is used.

Some plant substrates are very valuable and in this case it is worth to reprocess extraction waste which has been produced with other methods or to repeatedly extract the substrate.

Some embodiments of the present invention are further explained in the following examples.

### Example 1

An extract of rhizomes of *Iridaceae* was prepared. Rhizomes were crushed to obtain a fine powder. The plant powder was contacted with an aqueous extracting solution in a ratio of 30 g solvent per gram rhizome to compensate swelling of the rhizome. Three plant powder samples were extracted with three different extraction solutions. In a first run, 12.5 wt.-% sodium butanoate (NaC₄) was contacted with the rhizome for 30 min. In a second run, rhizome was contacted with 1.5 wt.-% sodium myristate (NaC₁₄) at 45°C. In a third run rhizome was contacted with 3.7 wt.-% Na oleate (NaC₁₈) for 30 min at 25°C.

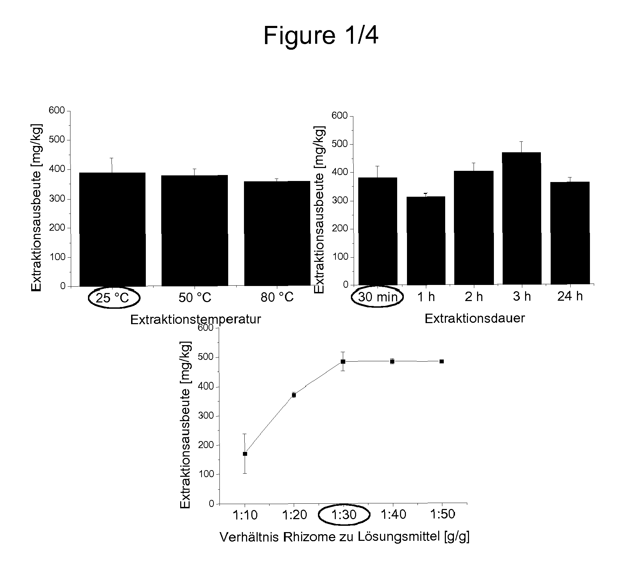

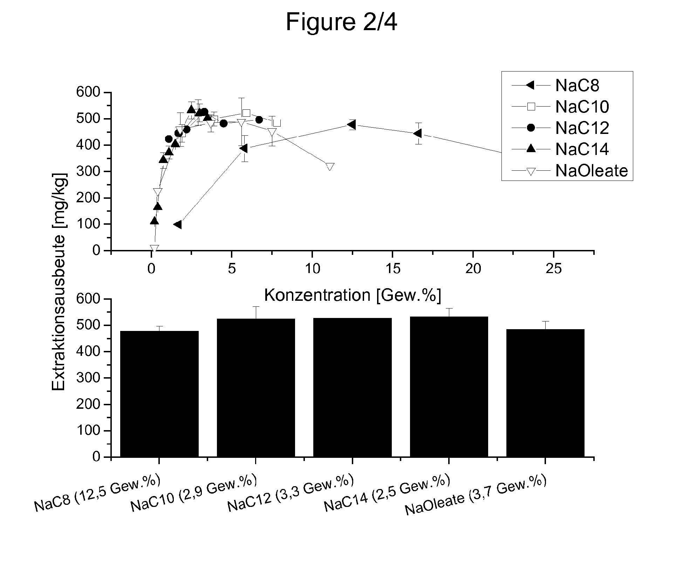

The results are shown in Fig. 1. It can be seen that the concentration of the sodium carboxylate is in correlation with the extraction efficiency. If a low concentration of the soap compound was used, the yield was only slightly higher than for an extraction with pure water. As soon as the concentration of the soap compound(s) in the extracting medium reached the CMC, i.e. the critical micelle concentration, the yield increased significantly. Furthermore, a correlation between the chain length of the fatty acid and the efficiency was found. If a short chain fatty acid salt was used, a higher concentration was necessary, whereas a lower concentration of the fatty acid salt could be used if a soap with a longer chain was used. It was found that sodium myristate was particularly useful as extracting agent. This is also shown in Fig. 2.

The extract obtained was analyzed and it was found that when using *Iris pallida* rhizome, 640 ± 40 mg/kg irones were obtained.

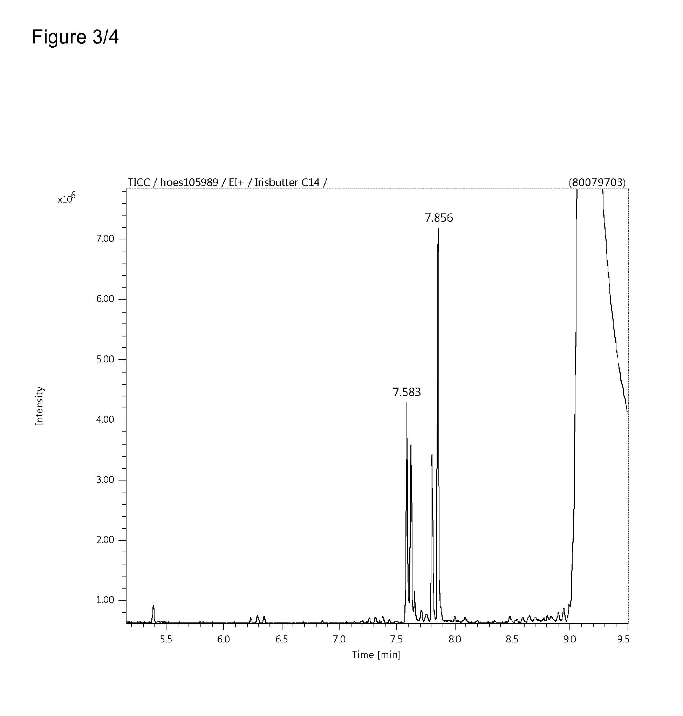

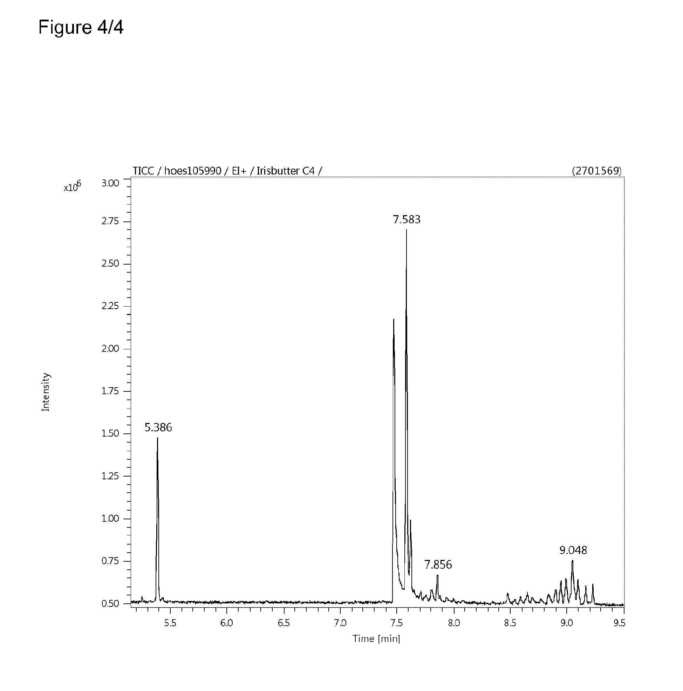

Furthermore it was found that the composition of fractions obtained by using different soap compounds varied. The shorter and the more hydrophilic the soap was, the more polar compounds were extracted. If an extraction was made with long chain soaps, less polar substances were obtained. Thus, by varying the chain length of the soap compound or by using a combination of more than one fatty acid soap with differing chain length the composition of the fraction obtained by the extraction can be controlled. These results can be seen in Fig. 3 and 4.

In a further example, a combination of NaC₄, NaC₈ and NaC₁₄ was used for extraction. Surprisingly it was found that this ternary combination had such a low dissolution temperature, that it could be used at room temperature, whereas a combination without NaC₈ had to be heated to obtain a solution. Using the ternary combination resulted in an extract with a very pleasant flavor.

Soap extracts obtained from different samples were further worked up to obtain flavour mixtures.

In one approach, a sample of a soap extract was mixed with diethyl ether to isolate the fragrance. The solvent afterwards was evaporated.

The remaining soap extracting solution was used again for extracting iris rhizomes. Thus, the soap extracting solution can be recycled.

In a second approach the soap extract was neutralized by adding an amount of an acid to lower the pH value. By adding the acid the micelles are broken und the fatty acids separate together with the odoriferous agents as upper oily phase and can be isolated.

In a third approach, a solution of a calcium or magnesium salt was added to the soap extract. Thereby, the fatty acids were precipitated as calcium or magnesium salts and could be separated, for example by filtration. The precipitate was dried and thereafter contacted with ethanol. The odoriferous agents, in particular the irones were dissolved by ethanol, whereas the calcium or magnesium fatty acid salts were not dissolved. After filtration an extract comprising odoriferous agents was obtained with a very pleasant odour.

### Example 2

Plant parts of rose and jasmine were used to obtain a fragrancy. Blossoms of rose and of jasmine were frozen and then ground to a fine powder. The blossom powder was contacted with an extraction medium as described in Example 1. Extraction was carried out for 30 min. The soap extract obtained had a very pleasant rose-like or jasmine-like, respectively, scent.

### Example 3

Orris butter as obtained in Example 1 by extraction with sodium butanoate or sodium myristate was analyzed with GC-MS. The spectra are shown in Fig. 3 and 4. As can be seen in Fig. 3 the composition of the extracts differs with regard to key compounds. The extract obtained with sodium myristate contains irones (7583-7586), but no polar compounds, whereas the extract obtained with sodium butanoate contains the polar compound acetovanillin (7470), but only few irones. Thus, to obtain full flavour it is preferable to use both soaps for extraction, preferably combined with a third soap and/or an additive, whereas for extraction of the irones in more or less quantitative amount extraction with only NaC₁₄ is preferred.

## Claims

1. Process for isolation of at least one odoriferous agent from a plant substrate comprising
a) contacting a plant substrate with an aqueous soap extraction solution comprising an aqueous medium and at least one soap compound R-C(=O)O⁻M⁺ or ⁺M-O(O=)C-R-C(=O)O⁻M⁺, wherein R is saturated or unsaturated linear, branched or cyclic C₃ to C₁₇ alkyl or C₆ to C₁₈ aryl, wherein the alkyl or aryl group can be substituted with up to 5 functional groups, and wherein M⁺ is a monovalent cation, to obtain a soap extract and
b) isolating a flavour mixture comprising at least one odoriferous agent from the soap extract obtained in step a).

2. Process according to claim 1 for isolation of at least one odoriferous agent from an *Iridaceae* substrate, a rose substrate or a jasmine substrate.

3. Process according to claim 2, wherein an *Iridaceae* substrate is a substrate from *Iris germanica, Iris pallida, Iris pallida argentea variegata, Iris pallida aurea variegata, Iris pallida alba, Iris neglecta, Iris spectabilis, Iris macedonica,* or *Iris florentina* and /or other varieties of the species *Iris barbata.*

4. Process according to one of the preceding claims, wherein the substrate is iris rhizome, iris extracts, iris extraction wastes, iris plant tissue, or a mixture thereof, rose blossoms and/or leaves, jasmine blossoms and/or leaves; which optionally are in particulate, crushed or powdered form.

5. Process according to one of the preceding claims, wherein the odoriferous agent comprises α-irone, ß-irone, γ-irone or any mixture thereof.

6. Process according to one of the preceding claims, wherein M⁺ is sodium, potassium, ammonium or cholinium.

7. Process according to one of the preceding claims, wherein the aqueous soap dispersion comprises at least one soap compound R-C(=O)O⁻M⁺, wherein R is CH₃(CH₂)ₙ, wherein n is 2 to 14, and wherein M⁺ is a monovalent cation.

8. Process according to one of the preceding claims, wherein additionally at least one hydrotropic additive is added to the soap extracting solution.

9. Process according to claim 8, wherein the hydrotropic additive is selected from a fatty alcohol, C₆-C₁₂ dicarboxylic acid or a salt or ester thereof, a C₆-C₁₂ hydroxy carboxylic acid or a salt or ester thereof, a branched or cyclic C₆-C₁₈ fatty acid or a salt or ester thereof, or a mixture thereof.

10. Process according to one of the preceding claims, wherein an aqueous soap extracting solution comprising a mixture of at least two different soap compounds is used, wherein the compounds differ by the number of n and/or the type of the cation.

11. Process according to one of the preceding claims, wherein the aqueous soap extracting solution comprises at least water, sodium myristate and/or potassium myristate.

12. Process according to one of the preceding claims, wherein for isolating a flavour mixture in step b)
i) the pH value and/or the temperature of the soap extract obtained in step a) are changed to separate at least part of the fatty acid and the flavour ingredients; or
ii) di- or polyvalent cations are added to the soap extract to precipitate at least part of the fatty acids as salt; or
iii) the soap extract obtained in step a) is extracted with a lipophilic solvent and optionally the solvent is removed.

13. Process according to one of the preceding claims, wherein an aqueous soap extracting solution comprising soaps of those fatty acids that are present in in the plant substrate is used.

14. Process according to one of the preceding claims, wherein the composition of the flavour mixture is controlled by using an aqueous soap extracting solution with a predetermined number and type of soap components or a combination of one or more soap components and one or more additives.

15. Process for extracting a composition with a predetermined percentage of lipophilic and hydrophilic odoriferous ingredients from a plant substrate wherein a soap dispersion is used comprising at least one myristate soap and at least one hydrotropic additive.
